# EUROPEAN PATENT SPECIFICATION

(11) **EP 0 284 094 B1**
(45) Date of publication and mention of the grant of the patent: **18.10.1995**
(21) Application number: 88104852.4
(22) Date of filing: 25.03.1988
(51) Int. Cl.: G06F 13/14, G06F 13/36

(54) **Tandem priority resolver**
Kaskadenartiger Prioritätsentscheider
Dispositif de décision de priorité en cascade

(30) Priority: 26.03.1987 US 30328
(43) Date of publication of application: 28.09.1988
(73) Proprietor: Bull HN Information Systems Inc., Billerica, MA 01821-4186 (US)
(72) Inventor: Lemay, Richard, Carlisle Massachusetts 01741 (US); Wallace, David, Chelmsford Massachusetts 01824 (US)
(74) Representative: Frohwitter, Bernhard, Dipl.-Ing.

(56) References cited:
- WO-A-86/03606
- US-A- 4 314 335
- IBM TECHNICAL DISCLOSURE BULLETIN, vol. 28, no. 12, May 1986, pages 5329-5333, New York, US; "High-speed processor bus arbitration"

## Description

This invention relates to priority resolvers used in computer systems for deciding access to a first circuit by a plurality of other circuits.

In the prior art, computer circuits request access to each other to accomplish different functions associated with processing. These requests usually occur asynchronously. For example, use of a memory may be requested by a processor via a bus or may be requested by an input/output device via a direct memory access bus which is different than the bus used by the processor. A bus itself is a resource, the use of which is requested by many computer circuits. Whether a circuit or a bus is being accessed by a plurality of circuits, because more than one circuit may request access or use of another circuit, priority resolvers are needed to assure that only one requesting circuit at a time is granted access to a requested circuit, bus or other resource. When there is more than one simultaneous request for the same circuit or resource, the requesting circuit with the highest priority is preferentially granted access to the circuit or resource.

A circuit arrangement for apportioning priority among cooperating computers is disclosed in the international application WO-A-86/03606 (Telefonaktiebolaget L. M. Ericsson). This priority apportioning arrangement for computers contains processors of two types, a high-priority type which can determine its priority itself in relation to processors of a second low-priority type when using a common bus. The arrangement contains a first logic circuit which has its first input activated on a request for access from one of the low-priority units, its second input activated on a request for access from the high-priority unit and its third activated during the whole time the bus is used, and has two outputs for assigning the bus a low-priority unit or the high-priority unit. The arrangement furthermore contains a second logic circuits with two inputs, of which one senses that the high-priority unit desires access and the other senses that this access can take place with delay, the circuit also having two outputs, of which one is for indicating to the first logic circuit that the access request from the high-priority unit is present, and the other for indicating that the bus is occupied. When the input signal to the second logic circuit indicates that granting the bus to the high-priority unit can take place with delay, the arrangement has time to grant the bus to a low-priority unit, but the high-priority unit still has immediate access to the bus after termination of the task of the low-priority unit.

A problem with prior art circuit access priority resolution circuits is that an access grant output from one priority resolution circuit will sometimes be an access request to a second priority resolution circuit. Each priority resolution circuit has a finite period of time in which it performs its function and grant access to one of a plurality of requesting circuits that are simultaneously requesting access to another circuit or resource. Only after a decision has been made and access granted to the highest priority requesting circuit to a first priority resolution circuit is an access request made to a second priority resolution circuit. This typical sequence of operations is serial in nature and uses a finite period of time. The finite periods of time involved in priority resolution contribute to limiting the speed of operation of the computer.

It is thus an object of this invention to provide a priority resolver apparatus that can perform its function while shortening the time typically required to connect a requesting circuit to a requested circuit.

This object is achieved in the priority resolver apparatus according to the characteristic features of claim 1. Further advantageous embodiments may be taken from the subclaims.

The present tandem priority resolver shortens the time between a requesting circuit initiating a request for access to a requested circuit and the requesting circuit actually functioning with the requested circuit. To shorten this time, functions that have heretofore been performed in the priority resolution circuits in a serial fashion are performed in parallel.

More particularly, a first portion of the novel priority resolver circuit taught herein and associated with an access requesting.circuit makes a request for access to another portion of the priority resolver circuit associated with the requested circuit before the first portion has chosen the highest priority one of a plurality of requesting circuits that have concurrently bid for access to the requested circuit. Before the portion of the priority resolver associated with the requested circuit can respond to the access request and return an access grant signal, the first portion of the priority resolver circuit has chosen the highest priority requesting circuit. In this manner the time for accessing requested circuits is decreased and the overall speed of processing in the computer system is increased.

The invention will be better understood upon reading the following detailed description in conjunction with the drawing in which:
Figure 1 is a block diagram of a portion of a computer system having shared memory, memory controllers and adapters that utilize the present tandem priority resolver to improve the operating efficiency of the computer system;
Figure 2 is a block diagram schematic of a first portion of the tandem priority resolver associated with a requesting circuit in accordance with the teaching of the present invention; and
Figure 3 is a block diagram schematic of second portion of the tandem priority resolver associated with a requested circuit in accordance with the teaching of the invention.

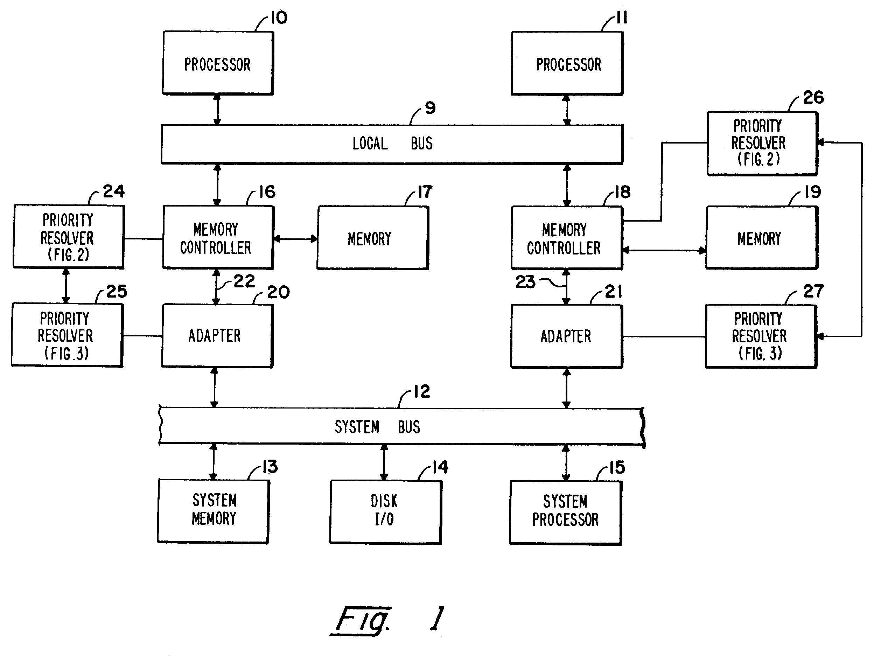

In Figure 1 is shown a block diagram of a portion of a computer system with memory controllers and adapters with which the novel tandem priority resolver is shown utilized. Processor 10 and 11 cooperate with system processor 15 in a multiprocessing arrangement to process application programs.

Memories 17 and 19 are large capacity memories basically dedicated to the joint use of application program processors 10 and 11 to increase their operating efficiency, and to increase the efficiency of use of memories 17 and 19. Memories 17 and 19 are respectively associated with memory controller 16 and memory controller 18 which control access to the memories from several sources. Processors 10 and 11 are not connected directly to system bus 12, but rather are connected to a local bus 9. Memories 17 and 19 are also not connected to the system bus. Also connected to local bus 20 are the memory controllers 16 and 17. Memory controllers 16 and 18 control shared access to their respective associated memories 17 and 19 by processor 10 and processor 11. In this manner the chances of either processors 10 or 11 having to wait to gain access to a memory are decreased.

Memories 17 and 19 may also be accessed from system bus 12 via adapters 20 and 21 respectively to load application programs and data to be processed into these memories for subsequent use by processors 10 and 11. Similarly, memories 17 and 19 may be read out to circuits connected to system bus 12.

In addition, processors 10 and 11 each have access via memory controllers 16 and 17 and adapter circuits 18 and 19 respectively connected thereto to system bus 12 to gain access to other storage circuits connected thereto such as system memory 13 and disk I/O 14.

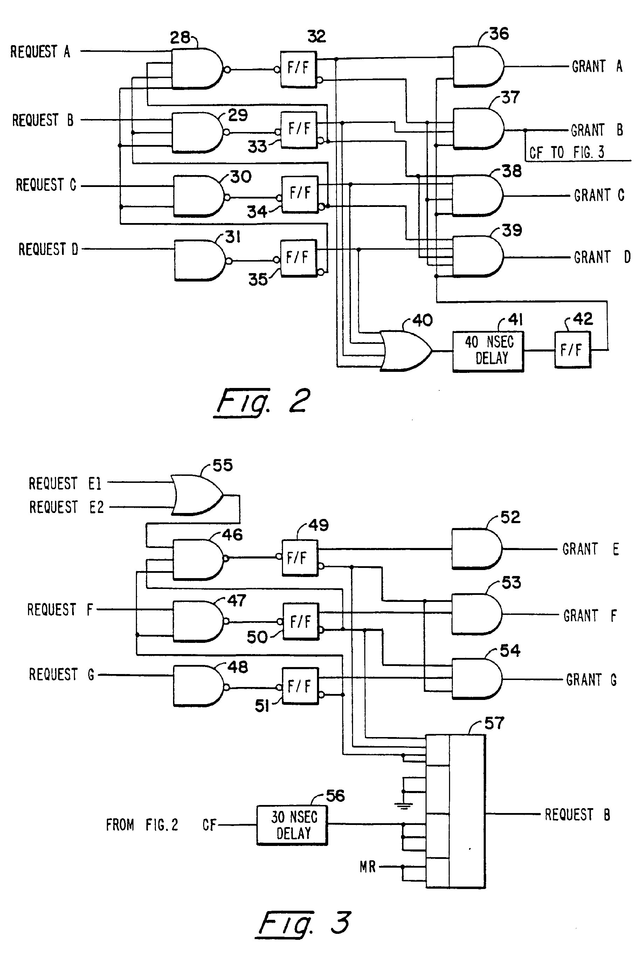

There are four basic types of memory read and write transactions that can be performed by the system configuration shown in block diagram form in Figure 1. First processor 10 may read or write to memory 17 associated with memory controller 16, processor 11 may read or write to memory 19 associated with memory controller 18, processor 10 may read or write to memory 19 associated with memory controller 18, and processor 11 may read or write to memory 17 associated with memory controller 16. Access between processors 10 and 11 and memory controllers 16 and 18 for these transactions is via local bus 20 and a switching circuit that is part of memory controllers 16 and 18 as shown in Figure 3. These transactions never access other storage circuits connected to system bus 12.

There are also transactions wherein some circuits connected to system bus 12, such as processor 15, may request and gain access to memories 17 and 19 to write programs or data therein for use by processors 10 and 11, or to read processed data from these memories. A request to access memory 17 associated with memory controller 16 is always made via adapter 20, and a request to access memory 19 associated with memory controller 18 is always made via adapter 21.

With another type of transaction processors 10 or 11 can read or write system memory 13 or other storage circuits connected to system bus 12. To implement this type of transaction processor 10 must access only memory controller 16, and processor 11 must access only memory controller 18. When memory controller 16 is seized by processor 10, controller 16 determines if a memory address received from processor 10 is to memory 17 and further determines if memory 17 is to be accessed. Upon determining that memory 17 is not to be accessed, memory controller 16 forwards the read or write request via adapter 20 to system bus 12. After memory controller 16 passes a memory read request to adapter 20 to be placed on system bus 12, memory controller 16 is not free to service other read or write requests from processor 10 until the read operation to system memory 13 is completed. However, memory controller 16 can still service read or write requests to memory 17 from processor 11. Write operations to system memory 13 are considered completed as soon as the request, address and data are passed to adapter 20, and memory controller 16 can then process other read or write requests from processor 10. When the request is for a read operation the program or data will be returned, and can only be returned over the same path that the request is made on. In addition, when adapter 20 receives the returned program or data it must make an access request to memory controller 16, and when that request is granted an appropriate connection is established through memory controller 16 and adapter 20 returns the data or program to processor 10. Thereafter, processor 10 is again free to request memory read or write operations from controllers 16 or 18. Similarly, processor 11 can access system memory 13 or other storage circuits via its associated memory controller 18 and adapter 21.

The last type of transaction is a lock cycle transaction wherein, for example, processor 10 can perform a read lock of either memory 17 or memory 19, but the read operation is not done directly through memory controller 16. Assuming processor 10 wants to do a read lock on memory 17, the address and read request sent to memory controller 16 is not used to read memory 17, but instead is passed to adapter 20. Adapter 20 places the read request and address onto system bus 12 and then recognizes that the address is to memory 17. Adapter 20 answers the request it just placed on bus 12 and receives the read request and address. Then adapter 20 makes a request for connection to memory controller 16 and memory 17. When that request is granted reading of memory 17 takes place. The information read out of memory 17 is returned to adapter 20 rather than to processor 10. Adapter 20 takes the information read out of memory 17 and destination and places it onto system bus 12. Adapter 20 then recognizes that the information it just placed on bus 12 is for processor 10 and restores the information. Adapter 20 again makes a request for use of controller 16. When this request is granted adapter 20 returns the information via memory controller 16 and local bus 20 to processor 10.

Similarly, if processor 10 requests a read lock operation to memory 19, the read request and address are passed via memory. controller 16 and adapter 20 to system bus 12 as mentioned in the last paragraph. However, adapter 21 recognizes that the read request is for memory 19 and takes the request and address from system bus 12. Adapter 21 makes a request for memory controller 18 to read memory 19, and when the request is granted memory 19 is read. Alike the read lock operation described in the last paragraph the information read out of memory 19 is returned through memory controller 18 and adapter 21 to system bus 12. Adapter 20 recognizes that the information on bus 12 is for processor 10 and stores the information. Adapter 20 then makes a request for use of memory controller. When this request is granted adapter 20 returns the information via memory controller 16 and local bus 20 to processor 10.

While the read lock operation described in the last two paragraphs is initiated by processor 10 to either memory 17 or memory 19, processor 11 can also request read lock operation to memories 17 and 19 and the operation is the same as that described in the last two paragraphs.

With processors 10 and 11 and adapter 20 all requesting access to memory controller 16, and processors 10 and 11 and adapter 21 all requesting access to memory controller 18, the prior art has recognized the need for priority resolution circuits for controlling the access to circuits 16 and 18. With different circuits requesting access through adapters 20 and 21 to memory controllers 16 and 18 respectively, priority resolution circuits are also needed for controlling access to the adapters.

In the following description only circuits 16, 17, 20, 24 and 25 are referred to but the description equally applies to circuits 18, 19, 21, 26 and 27.

When access is being requested through adapter 20 and memory controller 16 to either processor 10 or memory 17 the priority resolution circuits associated with circuits 16 and 20 must both operate, and in the prior art they operate in a serial fashion (one resolver making its decision before requesting of the other) which creates a problem. The problem is caused by the finite period of time in which these circuits operate to perform their function and grant access to one of a plurality of requesting circuits that are simultaneously requesting access to another circuit. Only after a decision has been made with regards to a first circuit (i.e. adapter 20) is the process repeated with regards to another circuit (i.e. memory controller 16). The requested circuit or resource must then respond and return a signal to the chosen requesting circuit to commence operation. Responsive to the return signal the chosen requesting circuit then commences performing an operation with the requested circuit. This typical sequence of operations is serial in nature and uses a finite period of time for each step. The finite periods of time add up and contribute to limiting the speed of operation of the computer.

The use of the present invention eases the problem described in the last paragraph by shortening the time between a requesting circuit initiating a request for access to a requested circuit and the requesting circuit actually functioning with the requested circuit.

In Figure 1 the portion of the novel tandem priority resolver that functions with memory controller 16 is priority resolver 24, and the portion that functions with adapter 20 is priority resolver 25. Similarly resolver portions 26 and 27 function respectively with memory controller 18 and adapter 21. To shorten the overall operating period a priority resolution function that has heretofore been performed in a serial fashion is now performed in parallel or tandem with other functions. This operation is described clearly in the remainder of the specification with reference to Figures 2 and 3.

Briefly, to shorten circuit access time priority resolver circuit 25 taught herein makes a request to priority resolver circuit 24 for access to a requested shared circuit such as memory 17 before it has chosen the highest priority one of a plurality of requesting circuits that have concurrently bid for access to the requested circuit. Before priority resolver circuit 24 associated with the requested circuit can respond to the access request, priority resolver circuit 25 has chosen the highest priority requesting circuit to have access to and function with the requested circuit. In this manner the time for accessing requested circuits is decreased and the overall speed of processing in the computer system is increased.

One embodiment of novel tandem priority resolver consists of the circuits shown in Figures 2 and 3. The circuit in Figure 2 is associated with memory controller 16 and the circuit in Figure 3 is associated with adapter 20. The circuits in Figures 2 and 3 operate in tandem and cooperate to resolve the priority of access requests to memory controller 16 by adapter 20, processor 10, processor 11, and a memory refresh circuit (not shown but well known in the art). Although the operation of the priority resolver is described with memory controller 16 and adapter 20, the resolver can work with almost any two circuits that must bid for access to each other.

There is another tandem priority resolver circuit associated with memory controller 18 and adapter 21 that functions in the exact same manner and for the same purpose. Accordingly, to avoid duplication, only the tandem priority resolver circuits associated with memory controller 16 and adapter 20 are described in this specification.

In Figure 2 is shown the part of the priority resolver that is associated with memory controller 16 and decides access thereto from other circuits. Request A is a signal from a memory refresh circuit that is not shown or described but which is well known in the art. Memory 17 must be periodically refreshed or its contents are lost as is known in the art. Accordingly, memory refresh Request A has the highest priority access to memory controller 16. Request B is from adapter 20 and requests access to memory controller 16 in order to read or write memory 17. Request C is from processor 11 and requests access to memory controller 16 in order to read or write memory 17. Request D is from processor 10 and requests access to memory controller 16 in order to read or write memory 17, to gain access via adapter 20 to system bus 12 to gain access to circuits thereon, or to gain access to system bus 12 to perform, for example, a semaphore operation. Request A has the highest priority and Request D has the lowest priority.

The circuit in Figure 2 responds to a single request signal at one of its four Request inputs to grant the request. When there is more than one request for access to memory controller 16 via the four Request inputs the highest priority request is first granted access and, thereafter, other requests are granted access in decreasing order of priority.

Whichever request is granted access has its corresponding Grant output go high. For example, if Request B has the highest priority and is granted access, the Grant B output goes high.

As is known in the art, within memory controller 16 there are gates for steering control and data signals through the controller. These gates are selectively operated enabled depending upon which access requesting circuit has been granted access by priority resolver 24. Accordingly, in a manner well known in the art the Grant outputs from resolver 24 and other signals, such as timing signals, are input to a control circuit (not shown) within memory controller 16. The control circuit responds to its inputs to generate output signals that selectively enable the gates within memory controller 16. The details of an exemplary prior art memory controller are not described herein to avoid detracting from the invention.

As may be seen in Figure 2 each Request input is one input to an AND gate and the output thereof is used to set a corresponding flip-flop. For example, Request B is input to AND gate 29 the output of which is connected to and used to set flip-flop 33. The upper output is an affirmative output of each of the flip-flops 32 through 35 and is connected to an input of a respective one of AND gates 36 through 39 as shown, and these save outputs from flip-flops 32-35 are also all input to OR gate 40. The outputs from AND gates 36 through 39 are the Grant outputs, that are connected to control circuitry within memory controller 16 and, in addition, are returned to control circuits within requesting circuits so that they know access has been granted and commence operation.

The lower output from each of flip-flops 32 through 35 is a non-affirmative output and are at a one level when the flip-flops are in their normal or non-operated state. The normal state exists when there are no access requests and grants made by the circuit in Figure 2. The non-affirmative output from flip-flop 35, which is normally at a one level, is connected to an input of each of higher priority input AND gates 28-30 as shown. The non-affirmative output from flip-flop 34 is connected to an input of each of input AND gates 28 and 29. Finally, the non-affirmative output from flip-flop 34 is connected to an input of input AND gate 28. With the connections to the input AND gates 28-30 just described, normally all inputs of these gates is high except for the Request input. When there is a request signal on a Request input the last input of its input AND gate is high and there is an output. For example, the lower three inputs of AND gate 28 are normally high, and when there is a request on Request input A the last input is high and there is an output from AND gate 28. The output from each of AND gates 28 through 31 is inverted, but is reinverted by the inverting input of the respective ones of flip-flops 32 through 35 to which the input AND gates are respectively connected. Accordingly, when the circuit in Figure 2 is idle and a request signal appears, the input AND gate to which it is connected provides an output which changes the state of the flip-flop to which the output of the gate is connected. For example, a request signal on Request input C will change flip-flop 34 from its normal state to a set state with its affirmative output high, which is a one level. The preferred implementation requires that flip-flops 32 - 35 and 49 - 51 be chosen such that their metastable characteristic is appropriate for the delay timing of delay circuit 41. Delay circuit is a 74F74 available from Fairchild Semiconductor.

As mentioned previously, the affirmative or one output from each of flip-flops 32 through 35 is connected to an input of an associated one of AND gates 36-39 as shown in Figure 2. When the affirmative or one output of one of flip-flops 32-35 is changed to its one state by a Request signal, it causes said one input of its associated one of AND gates 36-39 to be high. For there to be an output from these AND gates all other inputs must also be high. This is done by the non-affirmative outputs from flip-flops 32-35. The non-affirmative outputs are normally at a one or high level as previously mentioned. The non-affirmative output of flip-flop 32 is connected to one of the inputs of lower priority level AND gates 37-39, and the non-affirmative output of flip-flop 33 is connected to one of the inputs of lower priority level AND gates 38 and 39. Finally, the non-affirmative output of flip-flop 34 is connected to one of the inputs of lower priority level AND gate 39.

When there are no present access requests flip-flops 32-35 are all in their normal state as previously described. Inputs to AND gates 28-31 and 36-39 that are connected to the non-affirmative output of flip-flops 32-35 are all high. The appearance of a request signal on any one of the Request inputs will thereby result in a corresponding one of flip-flips 32-35 being set. For example, Request B will cause an output from input AND gate 29 which will set flip-flop 33 and its affirmative (upper) output is high while its non-affirmative (lower) output is low. This in turn causes all inputs of output AND gate 37 to be high so there is a high output from this gate. This high output is the Grant B signal. As previously mentioned Request B came from adapter 20 for a read or write operation to memory 17. The Grant B signal cause adapter 20 to commence its operation.

While adapter 20 has access to memory controller 16, flip-flop 33 remains set. Flip-flop 33 in its set or operated state has its non-affirmative output low. With the connections to the AND gates previously described, output AND gates 38 and 39 both have one low input which prevents them from providing a grant output as long as flip-flop 33 is set. Also, one input of input AND gate 28 is low which prevents a subsequent Request A from being granted until flip-flop 33 is released when a requesting circuit is finished with its function via adapter 20 to memory 17.

A delay line 41 provides a clock to flip-flop 42 which then provides one input (enable) to each of output AND gates 36-39 and must be high in order for there to be a Grant signal output from these AND gates. OR gate 40, delay circuit 41 and flip-flop 42 cooperate to delay the generation of a Grant signal for forty nanoseconds after a Request signal is received. This is done for two reasons. First, the time delay allows an operated one of flip-flops 32-35 to settle before the output AND gate connected thereto is allowed to operate. This assures more reliable circuit operation. Secondly, the delay permits a higher priority circuit to be granted access when two request signals are concurrently input at the Request inputs. For example, if Request A and Request C were received concurrently, their flip-flops 32 and 34 would be set at the same time. The operation of flip-flop 32 removes the high input to output AND gate 38 from the non-affirmative output of flip-flop 32. Shortly thereafter, the output of delay flip-flop 42 goes high and only output AND gate 36 has all its inputs high at that time. The higher priority level Grant A is generated.

The output of AND gate 37 in Figure 2 is connected via lead CF to a delay circuit 56 of the priority resolver in Figure 3. The purpose is described further in this specification with reference to Figure 3.

In Figure 3 is shown the schematic block diagram of the other portion of the tandem priority resolver and which functions with adapter 20. The circuit in Figure 3 is similar to the circuit in Figure 2 that has been described in the previous paragraphs. There are only three Request inputs that are designated Request E, Request F and Request G. Adapter 20 has two queues in which it stores access requests received via system bus 12 in Figure 1 to access memory controller 16 and thereafter read or write memory 17. These are Requests E1 and E2 which are input to OR gate 55 which combines them as a Request E to input AND gate 46. Request F is from another computer circuit called an accomodater that is not described herein. Request G is a request received from a circuit connected to system bus 12 in Figure 1, not to access memory 17, but to establish a connection through memory controller 16 and then local bus 9 to processor 10. Request E has the highest priority while Request G has the lowest priority.

Input AND gates 46-48, flip-flops 49-51, and output AND gates 52-54 are all connected to each other and function with each other in the same manner as the like circuit components shown in and described with reference to Figure 2. Accordingly, the operation of these circuits is not repeated here for the sake of brevity. However, the differences between the circuits in Figures 2 and 3 is described in detail.

The major difference between Figures 2 and 3 is that the non-affirmative (lower) output from each of flip-flops 49-51 are connected to inputs of an AND/OR-INVERT gate 57 which is an 74S64 gate available from Texas Instruments. The major function of gate 57 is to generate the Request B signal which is the adapter 20 request to the memory controller 16 priority circuitry of Figure 2. When one of flip-flops 49-51 is operated in the process of granting an access request through adapter 20 to memory controller 16 there is a Request B request output from gate 57. This Request B is input to priority resolver 24 in Figure 2 as described previously.

When the memory controller 16 priority resolver in Figure 2 is in the process of granting adapter 20 access to memory controller 16, flip-flop 33 is operated. The Grant B output goes high and this high output is returned via lead CF and input to thirty nanosecond delay circuit 56 in Figure 3. After being delayed thirty nanoseconds this high output is input to gate 57 as shown. In response to the delayed high input the Request B output from gate 57 is terminated. This allows for clearing flip-flop 33 in Figure 2 without getting a duplicate request for access to memory controller 16 from adapter 20.

Thus, when a single request is being made to adapter 20 to access memory controller 16, there is a request E, F or G. At the same time that one of flip-flops 49-51 is operated adapter access Request B is generated and input to the memory controller priority resolver circuitry of Figure 2. The request for access to memory controller 16 is made in tandem with priority resolution by the circuitry in Figure 3. Before the memory controller priority resolver in Figure 2 can honor Request B, the priority resolver in Figure 3 generates a Grant output. This tandem operation speeds the overall operation of the priority resolution circuitry as compared to prior art operation. For concurrent access requests the highest priority request is granted first.

The MR input to gate 57 is of value when adapter 20 has been granted access via memory controller 16 to memory 17 to perform a read operation by the operation of the priority resolvers in both Figures 2 and 3. This MR input goes high when the requested data is read out of memory 17 and remains high until the requested data is returned via adapter 20 to the requesting circuit connected to system bus 12. This prevents other requests being made to access memory controller 16 from adapter 20 until the read operation is completed.

While what has been described hereinabove is the preferred embodiment of the invention those skilled in the art may make numerous changes. For example, the number of Request inputs may be changed or the amount of delay provided by the delay circuits may be varied. In addition, the circuits that may utilize the tandem priority circuitry disclosed herein are numerous and go beyond the exemplary memory controller and adapter disclosed.

## Claims

1. A priority resolver network comprising first (25) and second (24) priority resolver circuits, each of said resolver circuits (24, 25) having a plurality of input means (E1, E2, F, G; A, B, C, D) to concurrently receive groups of or individual input signals (REQUEST) representing different requests for access to a resource, said input signals (REQUEST) being allocated different priorities by hardware coupling of said resolver circuits, each of said resolver circuits (24, 25) having respective output means corresponding to said input means, said resolver circuits (24, 25) delivering output signals (GRANT) corresponding to the input signals (REQUEST), whereby out of a group of concurrently received input signals (REQUEST E1, E2, F, G; REQUEST A, B, C, D) that particular output signal (GRANT) is delivered which corresponds to that input signal (REQUEST) which has the highest allocated priority of said concurrently received input signals (REQUEST), **characterized in that**
- said first priority resolver circuit (25) comprises a logical circuit element (57) for delivering an output signal (REQUEST B) upon receipt of any input signal (REQUEST E1, E2, F, G) of the respective group of input signals, and
- the said output signal (REQUEST B) is coupled to an input means of said second resolver circuit (24) as one of the input signals (REQUEST B) of the respective group of input signals.

2. The priority network of claim 1, **characterized in that** said first resolver circuit (25) comprises a plurality of flip-flops (49-51) each allocated to a corresponding input means for storing a representation of a received input signal (REQUEST), and wherein said logical circuit element (57) is coupled to all of said flip-flops (49-51) for delivering said output signal (REQUEST B) when any one or more of said flip-flops (49-51) transfers to a state ("1") representing the receipt of an input signal (REQUEST) at the allocated input means (E1, E2, F, G).

3. The priority network of claim 2, **characterized in that** in said first resolver circuit (25) the outputs of said flip-flops (49-51) are coupled to the inputs of respective corresponding gate means (52-54) thereby allocating by hardware connections different priorities for said group of concurrently received input signals (REQUEST E1, E2, F, G) such that the one of said gate means (52-54) which delivers an output signal (GRANT E, F, G) being the gate corresponding to the one of the flip-flops (49-51) in said state ("1") that corresponds to the highest allocated priority of the concurrently received input signals (REQUEST E1, E2, F, G).

4. The priority network of claim 1, 2 or 3, **characterized in that** in said second resolver circuit (24) the input signal with highest priority (REQUEST A) is received from a memory refresh circuit, and the input signal with second highest priority (REQUEST B) is received from the output of said logical circuit element (57).

5. The priority network of claim 1, 2 or 3, **characterized in that** one output means (37) of the second priority resolver (24) is coupled (CF) via a delay circuit (56) to said logical circuit element (57).

6. The priority network of claims 4 and 5, **characterized in that** said one output means (37) is allocated to said input signal with second highest priority (REQUEST B).

## Patentansprüche

1. Prioritätsentscheidernetzwerk, das eine erste (25) und eine zweite (24) Proritätsentscheiderschaltung aufweist, wobei jede der Entscheiderschaltungen (24, 25) eine Vielzahl von Eingabeeinrichtungen (E1, E2, F, G; A, B, C, D) aufweist, um gleichzeitig Gruppen von Eingabesignalen (REQUEST) oder einzelne Eingabesignale (REQUEST) zu empfangen, welche unterschiedliche Anforderungen zum Zugriff auf ein Betriebsmittel darstellen, wobei den Eingabesignalen (REQUEST) unterschiedliche Prioritären durch Hardware-Kopplung der Entscheiderschaltungen zugewiesen sind, wobei die Entscheiderschaltungen (24, 25) jeweilige Ausgabeeinrichtungen aufweisen, die mit den Eingabeeinrichtungen korrespondieren, wobei die Entscheiderschaltungen (24, 25) Ausgabesignale (GRANT) entsprechend der Eingabesignale (REQUEST) liefern. wodurch aus einer Gruppe von gleichzeitig empfangenen Eingabesignalen (REQUEST E1, E2, F, G; REQUEST A, B, C, D) dasjenige bestimmte Ausgabesignal (GRANT) geliefert wird, welches dem Eingabesignal (REQUEST) entspricht, welches die höchste zugewiesene Priorität der gleichzeitig empfangenen Eingabesignale (REQUEST) hat, dadurch gekennzeichnet, daß
- die erste Prioritätsentscheiderschaltung (25) ein logisches Schaltungselement (57) zum Liefern eines Ausgabesignals (REQUEST B) nach Empfang irgendeines Eingabesignals (REQUEST E1, E2, F, G) der jeweiligen Gruppe von Eingabesignalen aufweist, und
- das Ausgabesignal (REQUEST B) an eine Eingabeeinrichtung der zweiten Entscheiderschaltung (24) als eines der Eingabesignale (REQUEST B) der jeweiligen Gruppe von Eingabesignalen gekoppelt ist.

2. Prioritätsnetzwerk gemäß Anspruch 1, dadurch gekennzeichnet, daß die erste Entscheiderschaltung (25) eine Vielzahl von Flip-Flops (49-51) aufweist, von denen jedes einer entsprechenden Eingabeeinrichtung zum Speichern einer Darstellung eines empfangenen Eingabesignals (REQUEST) zugewiesen ist und wobei das logische Schaltungselement (57) mit allen Flip-Flops (49-51) zum Liefern des Ausgabesignals (REQUEST B) gekoppelt ist, wenn eines oder mehrere der Flip-Flops (49-51) in einen Zustand ("1") übergeht, der den Empfang eines Eingabesignals (REQUEST) an der zugewiesenen Eingabeeinrichtung (E1, E2, F, G) darstellt.

3. Prioritätsnetzwerk gemäß Anspruch 1, dadurch gekennzeichnet, daß in der ersten Entscheiderschaltung (25) die Ausgänge der Flip-Flops (49-51) mit den Eingängen der jeweils korrespondierenden Gattereinrichtungen (52-54) gekoppelt sind, wodurch durch Hardware-Verbindungen unterschiedliche Prioritäten für die Gruppen gleichzeitig empfangener Eingabesignale (REQUEST E1, E2, F, G) zugewiesen werden, so daß die eine der Gattereinrichtungen (52-54), welche ein Ausgabesignal (GRANT E, F, G) liefert, jenes Gatter ist, das dem einen der Flip-Flops (49-51) in dem Zustand ("1") entspricht, welcher der höchsten zugewiesenen Priorität der gleichzeitig empfangenen Eingabesignale (REQEST E1, E2, F, G) entspricht.

4. Prioritätsnetzwerk gemäß Anspruch 1, 2 oder 3, dadurch gekennzeichnet, daß in der zweiten Entscheiderschaltung (24) das Eingabesignal mit der höchsten Priorität (REQUEST A) von einer Speicherauffrischschaltung empfangen wird und das Eingabesignal mit zweithöchster Priorität (REQUEST B) vom Ausgang des logischen Schaltungselements (57) empfangen wird.

5. Prioritätsnetzwerk gemäß Anspruch 1, 2 oder 3, dadurch gekennzeichnet, daß eine Ausgabeeinrichtung (37) des zweiten Prioritätsentscheiders (24) über eine Verzögerungsschaltung (56) mit dem logischen Schaltungselement (57) gekoppelt ist (CF).

6. Prioritätsnetzwerk gemäß Anspruch 4 und 5, dadurch gekennzeichnet, daß die eine Ausgabeeinrichtung (37) dem Eingabesignal mit der zweithöchsten Priorität (REQUEST B) zugewiesen ist.

## Revendications

1. Réseau de décision de priorité, comprenant un premier (25) et un deuxième circuit (24) de décision de priorité, chacun desdits circuits de décision (24, 25) ayant une pluralité de moyens d'entrée (E1, E2, F, G; A, B, C, D) pour recevoir simultanément des signaux d'entrée individuels ou groupés (DEMANDE), représentant différentes demandes d'accès à une ressource, lesdits signaux d'entrée (DEMANDE) se voyant attribuer des priorités différentes par un couplage matériel desdits circuits de décision, chacun desdits circuits de décision (24, 25) ayant des moyens de sortie respectifs correspondant auxdits moyens d'entrée, lesdits circuits de décision (24, 25) délivrant des signaux de sortie (AUTORISATION) correspondant aux signaux d'entrée (DEMANDE), par lequel, parmi un groupe de signaux d'entrée reçus simultanément (DEMANDE E1, E2, F, G; DEMANDE A, B, C, D), un signal de sortie spécifique (AUTORISATION) est délivré qui correspond au signal d'entrée (DEMANDE) qui a la plus haute priorité attribuée parmi lesdits signaux d'entrée reçus simultanément (DEMANDE), caractérisé en ce que
- ledit premier circuit (25) de décision de priorité comprend un élément de circuit logique (57) pour délivrer un signal de sortie (DEMANDE B) après réception d'un quelconque signal d'entrée (DEMANDE E1, E2, F, G) du groupe correspondant de signaux d'entrée, et
- ledit signal de sortie (DEMANDE B) est couplé à un moyen d'entrée dudit deuxième circuit de décision (24) en tant que l'un des signaux d'entrée (DEMANDE B) du groupe correspondant de signaux d'entrée.

2. Réseau de priorité selon la revendication 1, caractérisé en ce que ledit premier circuit (25) de décision de priorité comprend une pluralité de bascules bistables (49-51), chacune associée à un moyen d'entrée correspondant afin de mémoriser une représentation d'un signal d'entrée reçu (DEMANDE) et dans lequel ledit élément de circuit logique (57) est couplé à toutes lesdites bascules bistables (49-51) pour produire ledit signal de sortie (DEMANDE B) quand l'une ou plusieurs desdites bascules bistables (49-51) se déplace dans un état ("1") représentant la réception d'un signal d'entrée (DEMANDE) au niveau du moyen d'entrée qui lui est associé (E1, E2, F, G).

3. Dispositif de priorité selon la revendication 2, caractérisé en ce que, dans ledit premier circuit (25) de décision, les sorties desdites bascules bistables (49-51) sont couplées aux entrées de moyens de portes correspondantes respectifs (52-54) attribuant ainsi par des connexions matérielles différentes priorités audit groupe de signaux d'entrée reçus simultanément (DEMANDE E1, E2, F, G) de façon à ce que celui desdits moyens de portes (52-54) qui délivre un signal de sortie (AUTORISATION E, F, G) soit la porte correspondant à celle des bascules bistables (49-51) dans ledit état ("1") qui correspond à la plus haute priorité attribuée parmi les signaux d'entrée reçus simultanément (DEMANDE E1, E2, F, G).

4. Dispositif de priorité selon la revendication 1, 2 ou 3, caractérisé en ce que, dans ledit deuxième circuit (24) de décision, le signal d'entrée ayant la priorité la plus élevée (DEMANDE A) est reçu par un circuit de rafraîchissement de la mémoire et le signal d'entrée ayant la deuxième priorité la plus élevée (DEMANDE B) est reçu par la sortie dudit élément de circuit logique (57).

5. Dispositif de priorité selon la revendication 1, 2 ou 3, caractérisé en ce que un des moyens de sortie (37) du deuxième circuit de décision de priorité (24) est couplé (CF) par l'intermédiaire d'un circuit de temporisation (56) audit élément (57) de circuit logique.

6. Dispositif de priorité selon les revendications 4 et 5, caractérisé en ce que ledit moyen de sortie (37) est attribué audit signal d'entrée ayant la deuxième priorité la plus élevée (DEMANDE B).
